# EUROPÄISCHE PATENTSCHRIFT

(11) **EP 4 194 625 B1**
(45) Veröffentlichungstag und Bekanntmachung des Hinweises auf die Patenterteilung: **30.04.2025**
(21) Anmeldenummer: 21213457.1
(22) Anmeldetag: 09.12.2021
(51) Int. Cl.: E03C 1/02

(54) **ROHRANSCHLUSSANORDNUNG**
PIPE CONNECTION DEVICE
AGENCEMENT DE RACCORDEMENT DE TUYAU

(43) Veröffentlichungstag der Anmeldung: 14.06.2023
(73) Patentinhaber: Geberit International AG, 8645 Jona (CH)
(72) Erfinder: BODACK, Andreas, 8853 Siebnen (CH); JUD, Patrick, 8753 Mollis (CH)
(74) Vertreter: Frischknecht, Harry Ralph

(56) Entgegenhaltungen:
- EP-A1- 1 484 544
- EP-A1- 3 404 149
- DE-U1- 8 603 097

## Beschreibung

### TECHNISCHES GEBIET

Die vorliegende Erfindung betrifft eine Rohranschlussanordnung nach Anspruch 1, eine Wandanordnung nach Anspruch 14 und ein Verfahren nach Anspruch 15

### STAND DER TECHNIK

Aus dem Stand der Technik sind vorfabrizierte Badezimmereinheiten bekannt. Die Badezimmereinheiten werden soweit vorfabriziert, dass diese beim Einbau im Wesentlichen noch mit der Frischwasserversorgung, der Abwasserentsorgung und der Energiezufuhr verbunden werden müssen. Solche Badezimmereinheiten werden beispielsweise aus Beton hergestellt, wobei vor dem Betoniervorgang sämtliche Ver- und Entsorgungsleitungen in eine Betonschalung eingelegt werden und anschliessend einbetoniert werden. Hierzu werden auch Rohranschlussstücke und damit verbundene Rohre eingelassen. Am Bestimmungsort können dann die vorhandenen Ver- und Entsorgungsleitungen über die Rohranschlusstücke an die eingelassenen Rohre verbunden werden.

Bei Rohranschlussstücken bzw. Fittings, die in den Wänden eingelassen sind, ergeht dabei das Problem, dass beim Anschliessen der Wasserleitung über eine Drehbewegung, das Rohranschlussstück in der Wand ausbrechen kann. Hierdurch wird das Rohranschlussstück relativ zur Wand verdreht und kann sich von den Armaturen, die im Inneren der Badezimmereinheit am Fitting angeschlossen sind, lösen, was zu undichten Stellen und somit zu Wasserschäden führen kann.

Die Druckschriften EP 1 484 544, EP 3 404 149 und DE 86 03 097 U1 zeigen jeweils eine Rohranschlussanordnung entsprechend dem Oberbegriff von Anspruch 1. Diese sind jedoch nicht dafür geeignet, in Wände eingelassen zu werden.

### DARSTELLUNG DER ERFINDUNG

Ausgehend von diesem Stand der Technik liegt der Erfindung eine Aufgabe zugrunde, eine Rohranschlussanordnung anzugeben, welche die Nachteile des Standes der Technik überwindet. Insbesondere soll die Rohranschlussanordnung derart ausgebildet sein, dass beim Einschrauben eines Rohrs, die Rohranschlussanordnung unbeschädigt bleibt. Diese Aufgabe löst der Gegenstand von Anspruch 1. Demgemäss umfasst eine Rohranschlussanordnung für eine Wandstruktur ein Rohranschlussstück und ein Lagerelement. Das Rohranschlussstück umfasst eine Seitenwand, die einen Rohrkanal begrenzt, eine an der Seitenwand angeordnete Presskontur, über welche das Rohranschlussstück mit einem ersten Rohr verbindbar ist, eine an der Seitenwand angeordnete Gewindestruktur zur Verbindung des Rohranschlussstücks mit einem zweiten Rohr und einen aussenseitig an der Seitenwand angeordneten Lagerabschnitt. Das Lagerelement umfasst eine sich entlang einer Mittelachse erstreckenden Lageröffnung, welche durch eine Wandung aussenseitig begrenzt ist, und mindestens ein sich aussenseitig von der Wandung radial zur Mittelachse weg erstreckendes Verdrehsicherungselement. Das Rohranschlussstück ist mit seinem Lagerabschnitt in die Lageröffnung einsetzbar und ist im eingesetzten Zustand drehfest in der Lageröffnung des Lagerelements gelagert. Im Einbauzustand ist das mindestens eine Verdrehsicherungselement in die Wandstruktur hineinerstreckbar, derart, dass eine auf die Gewindestruktur wirkende Kraft über das Verdrehsicherungselement in die Wandstruktur einleitbar ist.

Im Einbauzustand erstreckt sich das mindestens eine Verdrehsicherungselement mindestens teilweise oder vollständig in die Wandstruktur hinein.

Erfindungsgemäß weist das Verdrehsicherungselement mindestens eine Hauptfläche auf, welche in einer Ebene liegt, die winklig geneigt zur Mittelachse verläuft. Vorzugsweise liegen die Hauptflächen aller Verdrehsicherungselemente in einem gleichen Winkel zur Mittelachse.

Durch das Hineinerstrecken des Verdrehsicherungselements in die Wandstruktur kann die besagte auf die Gewindestruktur wirkende Kraft gut in die Wandstruktur eingeleitet werden. Mit anderen Worten gesagt wird dadurch ein erhöhter Widerstand bezüglich einer Krafteinwirkung bereitgestellt.

Im eingebauten Zustand ist das Lagerelement mindestens teilweise in einer Wandstruktur eingelassen. Das mindestens eine Verdrehsicherungselement, welches radial von der Wandung absteht, ist ebenfalls mindestens teilweise, vorzugsweise aber vollständig, in der Wandstruktur eingelassen. Durch das Verdrehsicherungselement wird das Lagerelement mit einem Element ausgestattet, welches eine grössere Widerstandskraft gegen einwirkende Drehmomente oder andere Kräfte bereitstellt. Ein solches Drehmoment bzw. eine solche Kraft wirkt beispielsweise dann auf das Lagerelement, wenn das zweite Rohr mit der Gewindestruktur verbunden wird. Das Drehmoment bzw. die Kraft wird dann über die drehfeste Lagerung des Rohranschlussstücks in der Lageröffnung vom Rohranschlussstück an das Lagerelement weitergeben. Das Verdrehsicherungselement sorgt für eine gute Krafteinleitung in die Wandstruktur.

Die Wandstruktur ist vorzugsweise eine gegossene Betonwand. Die Wandstruktur kann aber auch aus einem anderen Material sein.

Das Rohranschlussstück ist vorzugsweise aus Metall, wie beispielsweise aus Messing oder Rotguss. Das Lagerelement ist vorzugsweise aus Kunststoff, wie beispielsweise aus Acrylnitril-Butadien-Styrol-Copolymer.

Der Gewindeabschnitt ist vorzugsweise ein Innengewinde, welches innenseitig an der Seitenwand angeordnet ist. Die Presskontur ist vorzugsweise aussenseitig an der Seitenwand angeordnet.

Vorzugsweise erstreckt sich eine Mittelachse durch den Rohrkanal hindurch. Vorzugsweise erstreckt sich die Seitenwand um eine Mittelachse herum. Vorzugsweise ist die Presskontur und der Gewindeabschnitt in Richtung der Mittelachse bzw. in Durchflussrichtung des Rohrkanals versetzt zueinander angeordnet.

Vorzugsweise ist das Verdrehsicherungselement integral an der Wandung angeformt. Das Lagerelement ist vorzugsweise einstückig ausgebildet.

Vorzugsweise sind mehrere Verdrehsicherungselemente angeordnet, wobei die Verdrehsicherungselemente vorzugsweise in regelmässigen Abständen um die Mittelachse herum verteilt angeordnet sind.

Besonders bevorzugt sind drei oder vier Verdrehsicherungselemente angeordnet.

Vorzugsweise ist das Verdrehsicherungselement als flacher Wandabschnitt ausgebildet, welcher an einer Aussenseite der Wandung angeformt ist.

Das Verdrehsicherungselement erstreckt sich von der Aussenseite radial von der Wandung weg.

Vorzugsweise weist das Verdrehsicherungselement gegenüber seiner Anformstelle an einer Aussenseite der Wandung ein freies Ende auf. Unter der Ausdrucksweise "freies Ende" wird verstanden, dass am Ende des Verdrehsicherungselements an seinem Ende keine weiteren Elemente aufweist.

Vorzugsweise weist die Anformstelle einen konkav gerundeten Übergang vom Wandabschnitt zur Aussenseite auf. Hierdurch wird die Anformstelle mechanisch verstärkt.

Die Mittelachse und die genannte Ebene liegen so zueinander, dass die Mittelachse die Ebene mit einem Winkel schneidet. Der Winkel zwischen der Ebene und der Mittelachse ist vorzugsweise zwischen 30° und 60°, insbesondere zwischen 40° und 50°.

Vorzugsweise weist das Verdrehsicherungselement zwei beabstandet zueinander liegende und parallel zueinander verlaufende Hauptflächen auf. Diese Hauptflächen sind mit Seitenflächen miteinander verbunden.

Vorzugsweise ist die winklige Neigung der Hauptfläche zur Mittelachse bezüglich der Gewindestruktur des Rohranschlussstücks derart orientiert, dass das bei einem Anschlussvorgang des zweiten Rohrs entstehende Drehmoment eine Kraft auf das Verdrehsicherungselement in die Wandstruktur hinein bewirkt wird.

Das heisst, das beim Montagevorgang des zweiten Rohrs eine Kraft entsteht, welche durch die Orientierung des Verdrehsicherungselements so verläuft, dass das Lagerelement eine Kraft in die Wandstruktur hinein erfährt.

Mit anderen Worten verläuft die Hauptfläche mit einem Winkel winklig geneigt zur Mittelachse, wobei der Winkel vom Beginn des Gewindes gesehen zur Mittelachse in Steigungsrichtung des Gewindes zunimmt.

Vorzugsweise weisen die Verdrehsicherungselemente eine Länge von der Wandung bis zum freien Ende auf, welche zwischen 75% bis 100% der Distanz zwischen zwei bezüglich der Mittelachse gegenüberliegend zueinander angeordneten Flächen ist.

Vorzugsweise erstrecken sich die Verdrehsicherungselemente bis zu einem Kreis, der sich um die Mittelachse der Lageröffnung aufspannt, wobei der Kreis vorzugsweise einen Durchmesser im Bereich von 5 bis 10 Zentimeter, insbesondere im Bereich von 6 bis 9 Zentimetern aufweist.

Vorzugsweise weist die Wandung des Lagerelements mehrere um den Umfang verteilt angeordnete ebene Flächen auf, wobei deren Flächennormalen vorzugsweise jeweils rechtwinklig zur Mittelachse orientiert sind und wobei an jeder der Flächen oder an jeder zweiten Fläche je eines der besagten Verdrehsicherungselemente angeordnet ist. Vorzugsweise sind die Flächen gleichmässig um den Umfang verteilt angeordnet. Durch diese Ausbildung ergeht der Vorteil, dass auch die Wandung selbst einen Widerstand gegen das auf das Rohranschlussstück wirkende Drehmoment bereitstellt.

Mit anderen Worten heisst dies, dass die Wandung des Lagerelements im Bereich der Anformstelle des Verdrehsicherungselements als ebene Fläche ausgebildet ist, deren Flächennormale vorzugsweise rechtwinklig zur Mittelachse orientiert ist.

Vorzugsweise weist der Lagerabschnitt mindestens eine ebene Lagerfläche auf, deren Flächennormale rechtwinklig zur Mittelachse des Rohrkanals liegt. Die Lageröffnung weist mindestens eine ebene Lagerfläche auf, deren Flächennormale rechtwinklig zur Mittelachse liegt. Die beiden Lagerflächen liegen aneinander an, wenn das Rohranschlussstück in der Lageröffnung liegt.

Vorzugsweise sind mehrere Lagerflächen in gleichmässigen Abständen um den Umfang verteilt angeordnet.

Vorzugsweise ist die Lageröffnung als Innenmehrkant mit einer der Kantzahl entsprechenden Anzahl an Lagerflächen ausgebildet. Vorzugsweise weisen die Lagerflächen Einschnitte auf, die sich in Richtung der Mittelachse erstrecken. Die Einschnitte sind derart angeordnet, dass ein Rohranschlussstück mit einem als Aussenmehrkant ausgebildeten Lagerabschnitt mit gleicher Kantzahl in den Innenmehrkant einsetzbar ist und dass ein anderes Rohranschlussstück mit einem als Aussenmehrkant ausgebildeten Lagerabschnitt mit zum Innenmehrkant ungleicher Kantzahl in die Einschnitte einsetzbar ist.

Hierdurch kann beispielsweise ein Rohranschlussstück mit einem Lagerabschnitt, der als Sechskant ausgebildet ist, oder ein Rohranschlussstück mit einem Lagerabschnitt, der als Achtkant ausgebildet ist, in die gleiche Lageröffnung eingesetzt werden.

Vorzugsweise weist die Rohranschlussanordnung weiterhin einen Verschlussstopfen auf, wobei der Verschlussstopfen eine verschlussstopfenseitige Gewindestruktur aufweist, welche mit der Gewindestruktur des Rohranschlussstücks verbunden werden kann. Der Verschlussstopfen versperrt im eingesetzten Zustand den Zugang zum Rohrkanal.

Der Verschlussstopfen wirkt somit als Bauschutzelement, so dass bei der Fertigung kein Beton in den Rohrkanal eindringen kann.

Vorzugsweise wird der Verschlussstopfen von der Seite, die der Presskontur gegenüberliegt eingeschraubt. Der Verschlusstopfen liegt mit einem Flansch dichtend an einer Gegenfläche am Lagerelement anliegt.

Vorzugsweise weist die Lageröffnung einen Halteflansch mit einer ersten Fläche und einer zweiten Fläche auf. Das Rohranschlussstück liegt an der ersten Fläche an und der Verschlussstopfen liegt an der zweiten Fläche an. Hierdurch ist das Rohranschlussstück in der Lageröffnung bezüglich einer axialen Verschiebung gesichert.

Vorzugsweise liegt die Presskontur ausserhalb der Lageröffnung, wenn das Rohranschlussstück in die Lageröffnung eingesetzt ist.

Vorzugsweise weist die Presskontur aussenseitig Erhebungen und/oder Rillen auf, welche derart ausgebildet sind, dass mit dem ersten Rohr eine bezüglich Wasser dichte Pressverbindung bereitstellbar ist. Vorzugsweise wird das erste Rohr mit einem Pressfitting gegen die Presskontur gepresst. Das Pressfitting liegt vorzugweise auch in der Wandstruktur.

Vorzugsweise umfasst die Rohranschlussanordnung weiterhin das erste Rohr, wobei das erste Rohr über eine Pressverbindung, insbesondere mit einem Pressfitting, mit der Presskontur verbunden ist. Vorzugsweise umfasst die Rohranschlussanordnung weiterhin das zweite Rohr, wobei das zweite Rohr mit der Gewindestruktur des Rohranschlussstücks verbunden ist.

Eine Wandanordnung umfasst eine Rohranschlussanordnung nach obiger Beschreibung und eine Wandstruktur, wobei das Lagerelement in der Wandstruktur mindestens teilweise, vorzugsweise vollständig, eingelassen ist.

Ein Verfahren zur Montage der Wandstruktur ist durch folgende Schritte charakterisiert:
- in einem ersten Schritt wird das Rohranschlussstück über die Presskontur mit einem ersten Rohr verbunden,
- in einem zweiten Schritt wird das Rohranschlussstück mit dem ersten Rohr platziert, und
- in einem dritten Schritt wird die Wandstruktur bereitgestellt.

In einem vierten Schritt wird das zweite Rohr mit der Gewindestruktur des Rohranschlussstücks verbunden.

Die Schritte werden in der entsprechenden Reihenfolge durchgeführt. Vorzugsweise wird vor dem zweiten oder vor dem dritten Schritt der oben genannte Verschlusstopfen eingeschraubt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Explosionsansicht einer Rohranschlussanordnung gemäss einer Ausführungsform der vorliegenden Erfindung von vorne;
- Fig. 2: eine perspektivische Explosionsansicht der Rohranschlussanordnung nach Figur 1 von hinten;
- Fig. 3: eine perspektivische Ansicht der Rohranschlussanordnung nach den vorherigen Figuren von vorne;
- Fig. 4: eine perspektivische Ansicht der Rohranschlussanordnung nach den vorherigen Figuren von hinten;
- Fig. 5: eine geschnittene Ansicht der Rohranschlussanordnung nach den vorherigen Figuren;
- Fig. 6: eine perspektivische Ansicht einer Wandanordnung mit einer Rohranschlussanordnung nach den vorherigen Figuren;
- Fig. 7: eine Frontansicht der Wandanordnung nach Figur 6;
- Fig. 8: eine Schnittdarstellung der Wandanordnung nach den Figuren 6 und 7;
- Fig. 9: eine perspektivische Explosionsansicht einer weiteren Ausführungsform;
- Fig. 10: eine perspektivische Ansicht von Fig. 9 mit eingesetzten Rohranschlussstück einer ersten Art; und
- Fig. 11: eine perspektivische Ansicht von Fig. 9 mit eingesetzten Rohranschlussstück einer zweiten Art.

### BESCHREIBUNG BEVORZUGTER AUSFÜHRUNGSFORMEN

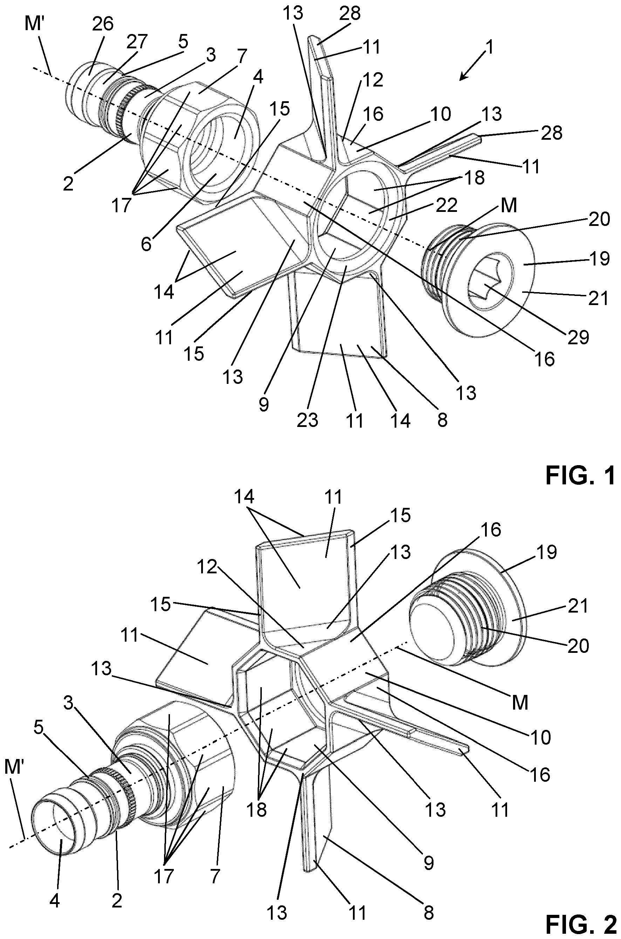

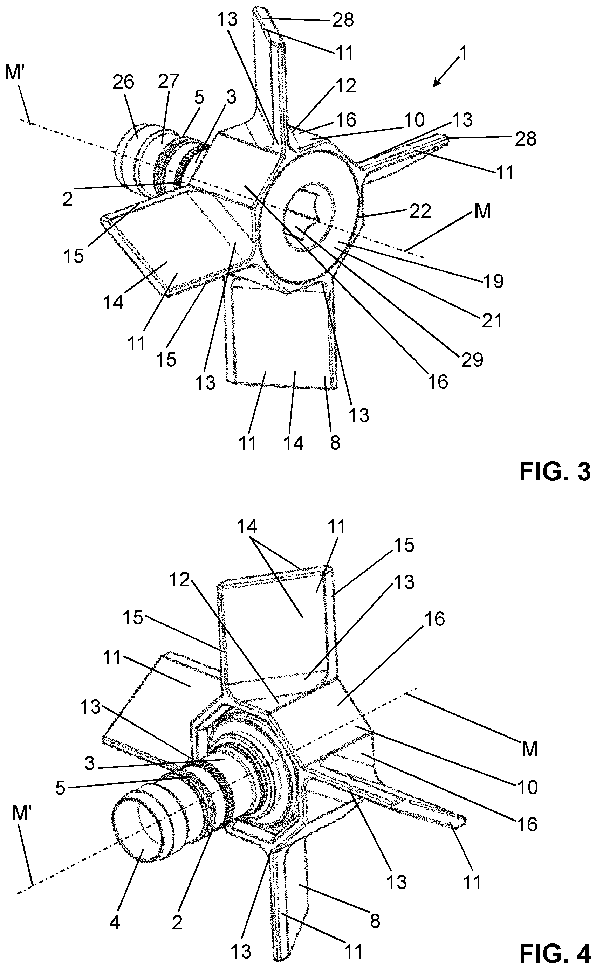

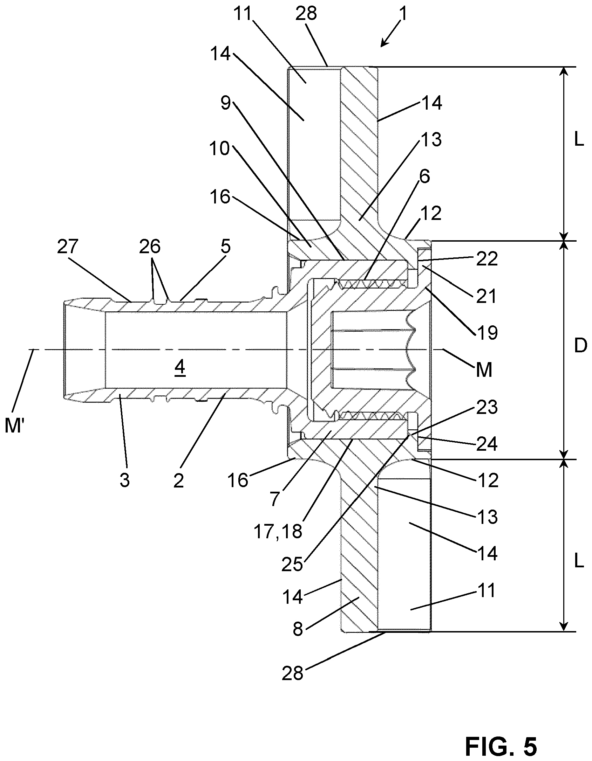

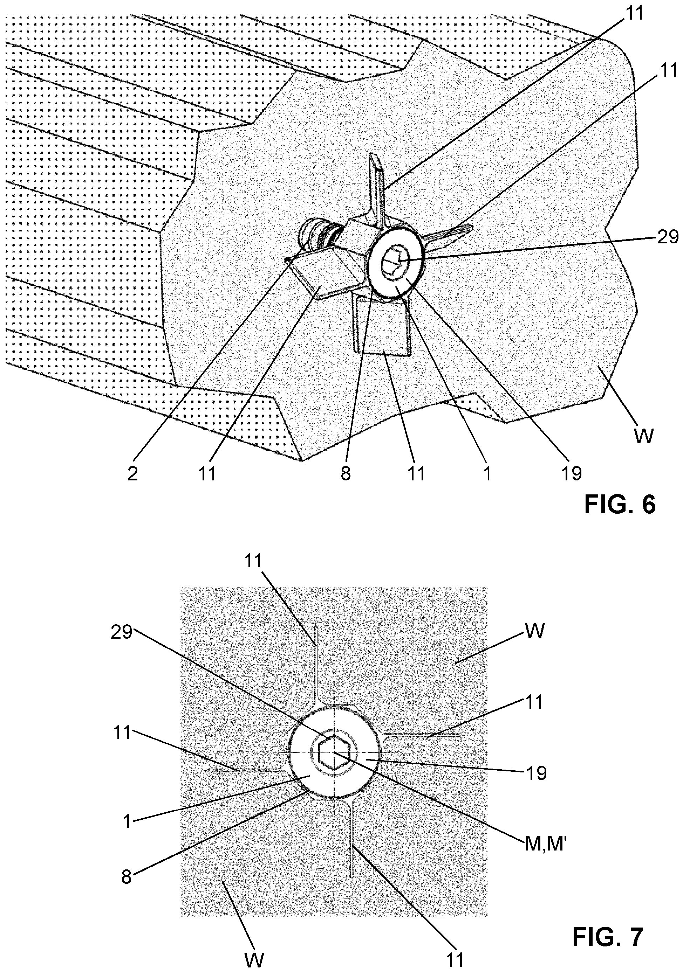

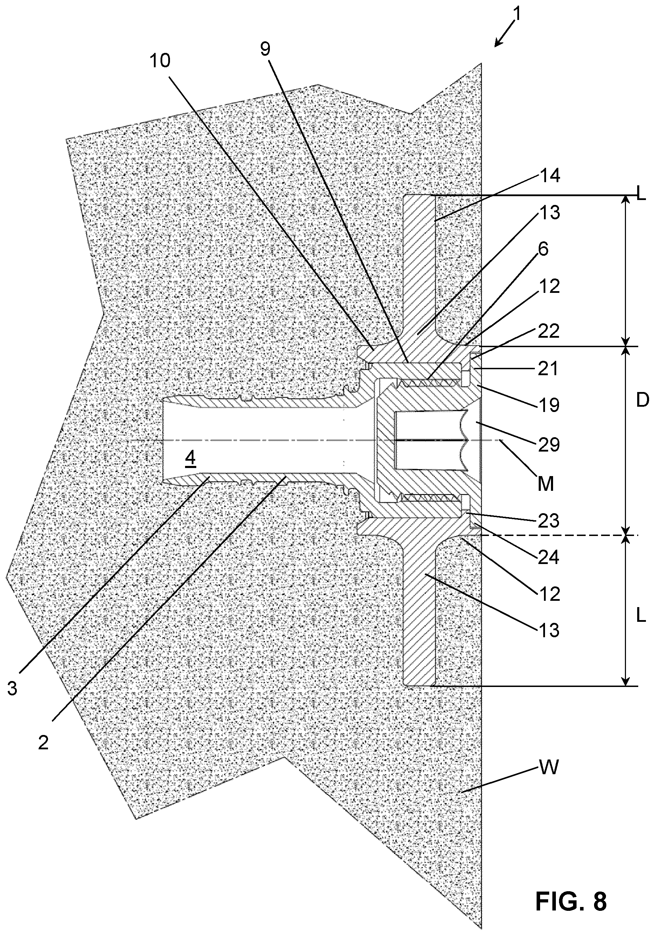

Anhand der Figuren 1 bis 5 wird eine Ausführungsform einer erfindungsgemässen Rohranschlussanordnung 1 erläutert. Die Rohranschlussanordnung 1 dient dem Einbau in eine Wandstruktur W, welche in den Figuren 6 bis 8 genauer gezeigt ist.

Die Rohranschlussanordnung 1 umfasst ein Rohranschlussstück 2 und ein Lagerelement 8. Im Einbauzustand liegt die Rohranschlussanordnung 1 im Wesentlichen vollständig in der Wandstruktur W. Das Rohranschlussstück 2 ist dabei im Lagerelement 8 gelagert. Das Lagerelement 8 weist dabei den Vorteil auf, dass durch seine Ausbildung die Einbausituation bezüglich Kräfte bzw. Drehmomente, die auf das Rohranschlussstück 2 besser in die Wandstruktur W eingeleitet werden und dass ein Verdrehen des Rohranschlussstücks 2 in der Wandstruktur W verhindert werden kann.

Das Rohranschlussstück 2 weist in der gezeigten Ausführungsform eine Seitenwand 3, die einen Rohrkanal 4 begrenzt, eine an der Seitenwand 3 angeordnete Presskontur 5, über welche das Rohranschlussstück 2 mit einem ersten Rohr verbindbar ist, eine an der Seitenwand angeordneten Gewindestruktur 6 zur Verbindung des Rohranschlussstücks mit einem zweiten Rohr, und einen aussenseitig an der Seitenwand angeordneten Lagerabschnitt auf. Mit dem Rohranschlussstück 2 lassen sich die beiden Rohre miteinander verbinden. Das erste Rohr, welches über die Presskontur 5 mit dem Rohranschlussstück 2 verbunden wird, wird vor dem Einbau in die Wandstruktur W mit dem Rohranschlussstück 2 verbunden. Das zweite Rohr, welches über die Gewindestruktur 6 mit dem Rohranschlussstück 2 verbunden wird, wird nach dem Einbau des Rohranschlussstücks 2 in die Wandstruktur W mit dem Rohranschlussstück 2 verbunden.

Durch den Rohrkanal 4 erstreckt sich eine Mittelachse M', um welche sich die Seitenwand 3 herum erstreckt. Die Gewindestruktur 6 ist in der gezeigten Ausführungsform ein Innengewinde. Der Durchmesser des Innengewindes ist hier grösser als der Durchmesser des Rohrkanals 4 im Bereich der Presskontur 5. Es ist in anderen Ausbildungen auch denkbar, dass der Durchmesser des Innengewindes kleiner ist als der Durchmesser des Rohrkanals 4 im Bereich der Presskontur. Die Presskontur 5 ist axial in Richtung der Mittelachse M' versetzt zur Gewindestruktur 6 angeordnet. Die Presskontur 5 weist in der gezeigten Ausführungsform mehrere Erhebungen 26 und Rillen 27 auf. Das erste Rohr wird gegen diese Erhebungen 26 und Rillen 27 verpresst.

Der besagte Lagerabschnitt 7 ist aussenseitig zur Gewindestruktur 6 angeordnet und erstreckt sich vorzugsweise im Wesentlichen über die gleiche axiale Länge wie die Gewindestruktur 6.

Das Lagerelement 8 ist mit einer sich entlang einer Mittelachse M erstreckenden Lageröffnung 9, welche durch eine Wandung 10 aussenseitig begrenzt ist, ausgebildet. Weiter umfasst das Lagerelement 8 mindestens ein Verdrehsicherungselement 11, welches sich aussenseitig von der Wandung 10 radial zur Mittelachse M von der Wandung 10 weg erstreckt.

Die Lageröffnung 9 ist in der gezeigten Ausführungsform nach den Figuren 1 bis 8 als Innenmehrkant, hier als Innenachtkant, ausgebildet. Die Lageröffnung umfasst demnach acht um den Umfang gleichmässig verteilt angeordnete Lagerflächen 18. Die Flächennormalen der Lagerflächen 18 liegt jeweils rechtwinklig zur Mittelachse M. Der Lagerabschnitt 7 ist hier als Aussenmehrkant, hier als Aussenachtkant, ausgebildet. Der Lagerabschnitt 7 umfasst demnach acht um den Umfang gleichmässig verteilt angeordnete Lagerflächen 17. Die Flächennormalen der Lagerflächen 17 liegt jeweils rechtwinklig zur Mittelachse M. Wenn der Lagerabschnitt 7 in die Lageröffnung 8 eingesetzt ist, so kommen die Lagerflächen 17 des Lagerabschnitts 7 mit den Lagerflächen 18 der Lageröffnung 9 in Kontakt, wodurch die drehfeste Lagerung zwischen dem Rohranschlussstück 2 und dem Lagerelement 8 bereitgestellt wird.

In anderen Ausführungsformen ist es auch denkbar, dass weniger als acht, insbesondere nur eine, zwei, vier oder sechs, Lagerflächen, angeordnet sind. Ebenfalls ist es denkbar, dass andere Strukturen, wie beispielsweise eine polygonale Form, eingesetzt wird.

In der gezeigten Ausführungsform sind vier Verdrehsicherungselemente 11 angeordnet. Die vier Verdrehsicherungselemente 11 sind dabei um die Mittelachse herum in regelmässigen Abständen zueinander angeordnet.

Vorzugsweise ist das Verdrehsicherungselement 11 als flacher Wandabschnitt ausgebildet. Der flache Wandabschnitt steht von der Aussenseite 12 der Wandung 10 ab und ist der Wandung 10 angeformt. Gegenüber der Anformstelle 13 an der Aussenseite 12 weist das Verdrehsicherungselement 11 ein freies Ende auf.

Das Verdrehsicherungselement 11 weist mindestens eine Hauptfläche 14 auf, welche in einer Ebene liegt, die winklig geneigt zur Mittelachse M verläuft. In der gezeigten Ausführungsform sind zwei Hauptflächen 14 parallel zueinander angeordnet. Die beiden Hauptflächen 14 sind über Seitenflächen 15 miteinander verbunden. Stirnseitig, also beim freien Ende, schliesst sich das Verdrehsicherungselement 11 mit einer Stirnfläche 28 ab. Die winklige Neigung der Hauptfläche 14 ist zur Mittelachse M bezüglich der Gewindestruktur 6 des Rohranschlussstücks 2 derart orientiert, dass das bei einem Anschlussvorgang des zweiten Rohrs entstehende Drehmoment eine Kraft auf das Verdrehsicherungselement 11 in die Wandstruktur W, in welcher das Lagerelement 8 einbaubar ist, hinein bewirkt wird.

In der gezeigten Ausführungsform weist die Wandung 10 des Lagerelements 8 mehrere um den Umfang verteilt angeordnete ebene Flächen 16 auf. Die Flächennormalen der ebenen Flächen sind jeweils rechtwinklig zur Mittelachse M orientiert. In der gezeigten Ausführungsform sind ist an jeder zweiten Fläche 16 je eines der besagten Verdrehsicherungselemente 11 angeordnet. Das Verdrehsicherungeselement 11 erstreckt sich dabei von einem Eckpunkt der Fläche 16 zu einem diametral gegenüberliegenden Eckpunkt der Fläche 16.

Das Verdrehsicherungselement 11 erstreckt sich von der Fläche 16 mit einer Länge L von der Fläche 16 weg. Die Länge L des Verdrehsicherungselements 11 entspricht dabei 75% bis 100% der Distanz D von zwischen zwei bezüglich der Mittelachse M gegenüberliegend zueinander angeordneten Flächen 16. Die Länge L kann aber auch grösser als die Distanz D sein.

In der gezeigten Ausführungsform umfasst die Rohranschlussanordnung 1 weiterhin einen Verschlussstopfen 19. Der Verschlussstopfen 19 umfasst eine verschlussstopfenseitige Gewindestruktur 20, welche mit der Gewindestruktur 6 des Rohranschlussstücks 2 verbunden werden kann. Im eingesetzten Zustand versperrt der Verschlussstopfen 19 im den Zugang zum Rohrkanal 4 von der Seite der Gewindestruktur her. Aussenseitig weist der Verschlussstopfen 19 eine Antriebsstruktur 29 auf, hier ein Innensechskant, mit welchem der Verschlussstopfen 19 angetrieben werden kann.

Der Verschlussstopfen 19 liegt mit einem Flansch 21 dichtend an einer Gegenfläche 22 am Lagerelement 8 an. Hierdurch wird verhindert, dass bei der Montage Fremdstoffe in den Rohrkanal 4 gelangen.

Die Lageröffnung 9 weist einen Halteflansch 23 mit einer ersten Fläche 24 und einer zweiten Fläche 25 auf. Das Rohranschlussstück 2 liegt an der ersten Fläche 24 an und der Verschlussstopfen 19 liegt an der zweiten Fläche 25 an. Der Verschlussstopfen 19 und das Rohranschlussstück 2 werden zum Halteflansch 23 geklemmt, wodurch das Rohranschlussstück 2 in der Lageröffnung 9 bezüglich einer axialen Verschiebung gesichert ist.

Nach der Montage der Rohranschlussanordnung 1 wird der Verschlussstopfen 19 entfernt, so dass das zweite Rohr mit der Gewindestruktur 20 verbunden werden kann. Nach Entfernen des Verschlussstopfens 19 wird das Rohranschlussstück 2 durch die Wandstruktur W, welche die Rohranschlussanordnung 1 umgibt, gehalten.

Im verbundenen Zustand, das heisst, wenn das Rohranschlussstück 2 in die Lageröffnung 9 eingesetzt ist, liegt die Presskontur 5 ausserhalb der Lageröffnung 9 und ist somit für die Verpressung des ersten Rohrs gut zugänglich.

Die Figuren 6 bis 8 zeigen eine Wandanordnung, welche eine Rohranschlussanordnung 1 und eine Wandstruktur W aufweist. Das Lagerelement 8 und das Rohranschlussstück 2 sind dabei in der Wandstruktur W eingelassen. Die Wandstruktur W ist beispielsweise eine gegossene Betonwand. In den Figuren werden die Rohre nicht dargestellt. Vorzugsweise ist das Lagerelement 8 so in der Wandstruktur, dass der Verschlussstopfen nach erfolgter Herstellung der Wandstruktur entfernt werden kann.

Ein Verfahren zur Montage der Wandanordnung, ist dadurch charakterisiert, dass in einem ersten Schritt das Rohranschlussstück 2 über die Presskontur 5 mit einem ersten Rohr verbunden wird, dass in einem zweiten Schritt das Rohranschlussstück 2 platziert wird, und dass in einem dritten Schritt die Wandstruktur W bereitgestellt wird. Vorzugsweise wird vor dem dritten Schritt der besagte Verschlussstopfen 19 montiert und nach dem dritten Schritt wieder entfernt. Nach dem dritten Schritt wird das zweite Rohr in die Gewindestruktur 6 eingeschraubt.

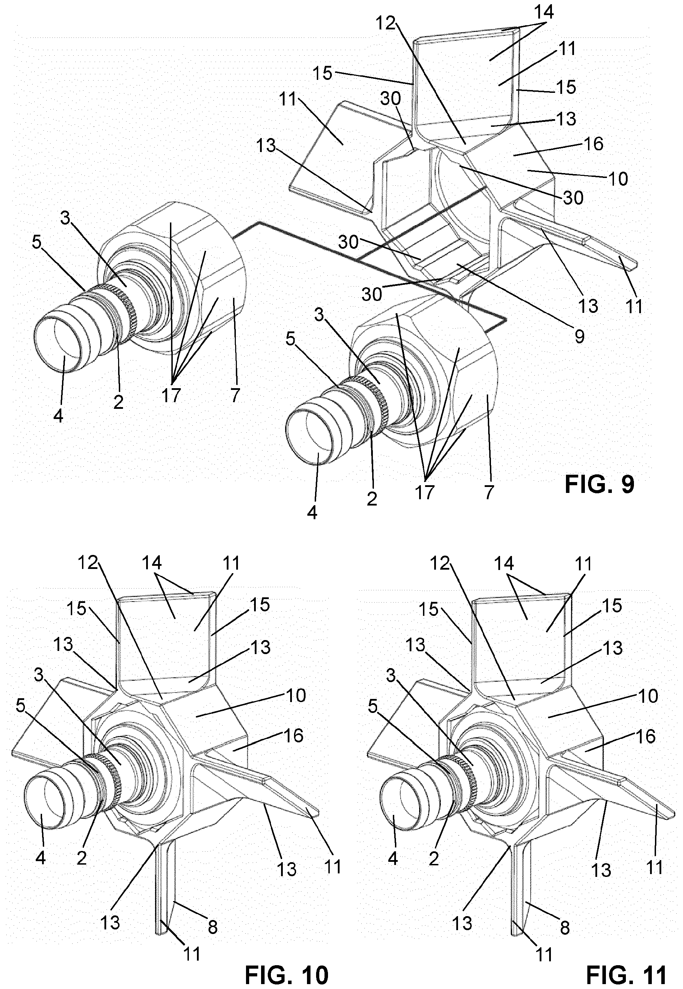

In den Figuren 9 bis 11 wird eine weitergehende Ausführungsform der Rohranschlussanordnung gezeigt. Die weitergehende Ausführungsform unterscheidet sich von der in den Figuren 1 bis 8 gezeigten Ausführungsform durch die Form der Lageröffnung 9. Die Lageröffnung 9 ist hier als Innenmehrkant mit einer der Kantzahl entsprechenden Anzahl an Lagerflächen 18 ausgebildet und einige der Lagerflächen 18 des Innenmehrkants weisen Einschnitte 30 auf. Die Einschnitte sind derart ausgebildet, dass ein Rohranschlussstück mit einem als Aussenmehrkant ausgebildeten Lagerabschnitt 7 mit gleicher Kantzahl in den Innenmehrkant einsetzbar ist, und dass ein Rohranschlussstück mit einem als Aussenmehrkant ausgebildeten Lagerabschnitt 7 mit zum Innenmehrkant ungleicher Kantzahl in die Einschnitte einsetzbar ist. In der Figur 9 wird gezeigt, dass ein Rohranschlussstück 2 mit einem Aussensechskant oder ein Rohranschlussstück 2 mit einem Aussenachtkant in die Lageröffnung 9 eingesetzt werden kann.

**BEZUGSZEICHENLISTE**

| | | | |
|---|---|---|---|
| 1 | Rohranschlussanordnung | 22 | Gegenfläche |
| 2 | Rohranschlussstück | 23 | Halteflansch |
| 3 | Seitenwand | 24 | erste Fläche |
| 4 | Rohrkanal | 25 | zweite Fläche |
| 5 | Presskontur | 26 | Erhebungen |
| 6 | Gewindestruktur | 27 | Rillen |
| 7 | Lagerabschnitt | 28 | Stirnfläche |
| 8 | Lagerelement | 29 | Antriebsstruktur |
| 9 | Lageröffnung | 30 | Einschnitte |
| 10 | Wandung | M | Mittelachse |
| 11 | Verdrehsicherungselement | M' | Mittelachse |
| 12 | Aussenseite | D | Distanz |
| 13 | Anformstelle | L | Länge |
| 14 | Hauptflächen | W | Wandstruktur |
| 15 | Seitenfläche | | |
| 16 | Fläche | | |
| 17 | Lagerfläche | | |
| 18 | Lagerfläche | | |
| 19 | Verschlussstopfen | | |
| 20 | verschlussstopfenseitige | | |
| | Gewindestruktur | | |
| 21 | Flansch | | |

## Patentansprüche

1. Rohranschlussanordnung (1) für eine Wandstruktur (W) umfassend
ein Rohranschlussstück (2) mit einer Seitenwand (3), die einen Rohrkanal (4) begrenzt, einer an der Seitenwand (3) angeordneten Presskontur (5), über welche das Rohranschlussstück (2) mit einem ersten Rohr verbindbar ist, einer an der Seitenwand (3) angeordneten Gewindestruktur (6) zur Verbindung des Rohranschlussstücks (2) mit einem zweiten Rohr, und einem aussenseitig an der Seitenwand (3) angeordneten Lagerabschnitt (7),
und ein Lagerelement (8) mit einer sich entlang einer Mittelachse (M) erstreckenden Lageröffnung (9), welche durch eine Wandung (10) aussenseitig begrenzt ist, und mit mindestens einem sich aussenseitig von der Wandung (10) radial zur Mittelachse (M) weg erstreckendem Verdrehsicherungselement (11),
wobei das Rohranschlussstück (2) mit seinem Lagerabschnitt (7) in die Lageröffnung (9) einsetzbar und im eingesetzten Zustand drehfest in der Lageröffnung (9) des Lagerelements (8) gelagert ist und
wobei im Einbauzustand das mindestens eine Verdrehsicherungselement (11) in die Wandstruktur (W) hineinerstreckbar ist, derart, dass eine auf die Gewindestruktur (6) wirkende Kraft über das Verdrehsicherungselement (11) in die Wandstruktur (W) einleitbar ist, **dadurch gekennzeichnet,**
**dass** das Verdrehsicherungselement (11) mindestens eine Hauptfläche (14) aufweist, welche in einer Ebene liegt, die winklig geneigt zur Mittelachse (M) verläuft.

2. Rohranschlussanordnung (1) nach Anspruch 1, **dadurch gekennzeichnet, dass** mehrere Verdrehsicherungselemente (11) angeordnet sind, wobei die Verdrehsicherungselemente (11) vorzugsweise in regelmässigen Abständen um die Mittelachse (M) herum verteilt angeordnet sind.

3. Rohranschlussanordnung (1) nach Anspruch 1 oder 2, **dadurch gekennzeichnet, dass** das Verdrehsicherungselement (11) als flacher Wandabschnitt ausgebildet ist, welcher an einer Aussenseite (12) der Wandung (10) angeformt ist.

4. Rohranschlussanordnung (1) nach einem der vorhergehenden Ansprüche, **dadurch gekennzeichnet, dass** das Verdrehsicherungselement (11) gegenüber einer Anformstelle (13) an einer Aussenseite (12) der Wandung (10) ein freies Ende aufweist.

5. Rohranschlussanordnung (1) nach einem der vorhergehenden Ansprüche, **dadurch gekennzeichnet, dass** die winklige Neigung der Hauptfläche (14) zur Mittelachse (M) bezüglich der Gewindestruktur (6) des Rohranschlussstücks (2) derart orientiert ist, dass das bei einem Anschlussvorgang des zweiten Rohrs entstehende Drehmoment eine Kraft auf das Verdrehsicherungselement (11) in die Wandstruktur (W), in welcher das Lagerelement (8) einbaubar ist, hinein bewirkt wird.

6. Rohranschlussanordnung (1) nach einem der vorhergehenden Ansprüche, **dadurch gekennzeichnet, dass** die Wandung (10) des Lagerelements (8) mehrere um den Umfang verteilt angeordnete ebene Flächen (16) aufweist, wobei deren Flächennormalen vorzugsweise jeweils rechtwinklig zur Mittelachse (M) orientiert sind und wobei an jeder der Flächen (16) oder an jeder zweiten Fläche (16) je eines der besagten Verdrehsicherungselemente (11) angeordnet ist.

7. Rohranschlussanordnung (1) nach einem der vorhergehenden Ansprüche, **dadurch gekennzeichnet, dass** der Lagerabschnitt (7) mindestens eine ebene Lagerfläche (17) aufweist, deren Flächennormale rechtwinklig zur Mittelachse des Rohrkanals (4) liegt, und dass die Lageröffnung (9) mindestens eine ebene Lagerfläche (18) aufweist, deren Flächennormale rechtwinklig zur Mittelachse (M) liegt, und wobei die beiden Lagerflächen (17, 18) aneinander anliegen, wenn das Rohranschlussstück (2) in der Lageröffnung (9) liegt.

8. Rohranschlussanordnung (1) nach einem der vorhergehenden Ansprüche, **dadurch gekennzeichnet, dass** die Lageröffnung (9) als Innenmehrkant mit einer der Kantzahl entsprechenden Anzahl an Lagerflächen (18) ausgebildet ist.

9. Rohranschlussanordnung (1) nach Anspruch 8, **dadurch gekennzeichnet, dass** die Lagerflächen (18) des Innenmehrkants Einschnitte (30) aufweisen, die derart ausgebildet sind,
dass ein Rohranschlussstück mit einem als Aussenmehrkant ausgebildeten Lagerabschnitt (7) mit gleicher Kantzahl in den Innenmehrkant einsetzbar ist, und
dass ein Rohranschlussstück mit einem als Aussenmehrkant ausgebildeten Lagerabschnitt (7) mit zum Innenmehrkant ungleicher Kantzahl in die Einschnitte einsetzbar ist.

10. Rohranschlussanordnung (1) nach einem der vorhergehenden Ansprüche, **dadurch gekennzeichnet, dass** die Rohranschlussanordnung weiterhin einen Verschlussstopfen (19) aufweist, wobei der Verschlussstopfen (19) eine verschlussstopfenseitige Gewindestruktur (20) aufweist, welche mit der Gewindestruktur (6) des Rohranschlussstücks (2) verbunden werden kann, wobei der Verschlussstopfen (19) im eingesetzten Zustand den Zugang zum Rohrkanal (4) versperrt.

11. Rohranschlussanordnung (1) nach Anspruch 10, **dadurch gekennzeichnet, dass** der Verschlussstopfen (19) von der der Presskontur (5) gegenüberliegenden Seite eingeschraubt werden kann und dass der Verschlusstopfen (19) mit einem Flansch (21) dichtend an einer Gegenfläche (22) am Lagerelement (8) anliegt.

12. Rohranschlussanordnung (1) nach Anspruch 10 oder 11, **dadurch gekennzeichnet, dass** die Lageröffnung (9) einen Halteflansch (23) mit einer ersten Fläche (24) und einer zweiten Fläche (25) aufweist, wobei das Rohranschlussstück (2) an der ersten Fläche (24) anliegt und der Verschlussstopfen (19) an der zweiten Fläche (25) anliegt, und wobei dadurch das Rohranschlussstück (2) in der Lageröffnung (9) bezüglich einer axialen Verschiebung gesichert ist.

13. Rohranschlussanordnung (1) nach einem der vorhergehenden Ansprüche, **dadurch gekennzeichnet, dass** wenn das Rohranschlussstück (2) in die Lageröffnung (9) eingesetzt ist, die Presskontur (5) ausserhalb der Lageröffnung (9) liegt; und/oder dass die Presskontur (5) aussenseitig Erhebungen (26) und/oder Rillen (27) aufweist, welche derart ausgebildet sind, dass mit dem ersten Rohr eine bezüglich Wasser dichte Pressverbindung bereitstellbar ist.

14. Wandanordnung umfassend eine Rohranschlussanordnung (1) nach einem der vorhergehenden Ansprüche und eine Wandstruktur (W), wobei das Lagerelement (8) in der Wandstruktur (W) eingelassen ist.

15. Verfahren zur Montage einer Wandanordnung nach Anspruch 14, **dadurch gekennzeichnet, dass** in einem ersten Schritt das Rohranschlussstück (2) über die Presskontur (5) mit einem ersten Rohr verbunden wird, dass in einem zweiten Schritt das Rohranschlussstück (2) platziert wird, und dass in einem dritten Schritt die Wandstruktur (W) bereitgestellt wird.

## Claims

1. Pipe connection arrangement (1) for a wall structure (W), comprising
a pipe connection part (2)
with a side wall (3) which delimits a pipe channel (4),
with a pressing contour (5) arranged on the side wall (3) and via which the pipe connection part (2) is connectable to a first pipe,
with a threaded structure (6) arranged on the side wall (3) for connecting the pipe connection part (2) to a second pipe,
and with a mounting section (7) arranged on the exterior on the side wall (3),
and comprising a mounting element (8) with a mounting opening (9) extending along a center axis (M), and being delimited on the exterior by a wall (10), and with at least one anti-rotation element (11) which on the exterior of the wall (10) extends away radially towards the center axis (M),
wherein the pipe connection part (2) is insertable with its mounting section (7) into the mounting opening (9) and in an inserted state is mounted in a rotationally fixed manner in the mounting opening (9) of the mounting element (8), and
wherein in an installed state, the at least one anti-rotation element (11) can be extended into the wall structure (W) such that a force acting on the threaded structure (6) can be transmitted into the wall structure (W) via the anti-rotation element (11),
**characterized in that**
the anti-rotation element (11) comprises at least one main surface (14), which lies in a plane which runs at an angularly inclined manner with respect to the center axis (M).

2. Pipe connection arrangement (1) according to claim 1, **characterized in that** a plurality of anti-rotation elements (11) are arranged, wherein the anti-rotation elements (11) preferably are arranged in a regularly spaced distribution about the center axis (M).

3. Pipe connection arrangement (1) according to claim 1 or 2, **characterized in that** the anti-rotation element (11) is formed as a flat wall section, which is integrally formed on an exterior side (12) of the wall (10).

4. Pipe connection arrangement (1) according to any one of the preceding claims, **characterized in that** the anti-rotation element (11) comprises a free end opposite an adjoining point (13) on an exterior side (12) of the wall (10).

5. Pipe connection arrangement (1) according to any one of the preceding claims, **characterized in that** the angled inclination of the main surface (14) with respect to the center axis (M) is oriented with respect to the threaded structure (6) of the pipe connection part (2) in such a manner that a torque resulting from a connection process of the second pipe causes a force to be effected on the anti-rotation element (11) into the wall structure (W) in which the mounting element (8) can be fitted.

6. Pipe connection arrangement (1) according to any one of the preceding claims, **characterized in that** the wall (10) of the mounting element (8) comprises a plurality of flat surfaces (16) which are distributed around the circumference, wherein their surface normals preferably are in each case oriented perpendicular to the center axis (M), and wherein on each of the surfaces (16) or on every second surface (16) in each case one of said anti-rotation elements (11) is provided.

7. Pipe connection arrangement (1) according to any one of the preceding claims, **characterized in that** the mounting section (7) comprises at least one flat mounting surface (17), the surface normal of which lies perpendicular to the center axis of the pipe channel (4), and that the mounting opening (9) comprises at least one flat mounting surface (18), the surface normal of which lies perpendicular to the center axis (M), and wherein the two mounting surfaces (17, 18) abut on each other, when the pipe connection part (2) lies in the mounting opening (9).

8. Pipe connection arrangement (1) according to any one of the preceding claims, **characterized in that** the mounting opening (9) is formed as an interior multi-edged element with a number of mounting surfaces (18) corresponding to the number of edges.

9. Pipe connection arrangement (1) according to claim 8, **characterized in that** the mounting surfaces (18) of the interior multi-edged element comprise incisions (30) which are formed such
- that a pipe connection part with a mounting section (7) formed as an exterior multi-edged element with the same number of edges can be inserted into the interior multi-edged element, and
- that a pipe connection part with a mounting section (7) formed as an exterior multi-edged element with a different number of edges can be inserted into the incisions.

10. Pipe connection arrangement (1) according to any one of the preceding claims, **characterized in that** the pipe connection arrangement furthermore comprises a closing plug (19), wherein the closing plug (19) comprises a closing-plug-sided threaded structure (20), which can be connected to the threaded structure (6) of the pipe connection part (2), wherein the closing plug (19) in a plugged-in state blocks the entrance to the pipe channel (4).

11. Pipe connection arrangement (1) according to claim 10, **characterized in that** the closing plug (19) can be screwed in from the side opposite of the pressing contour (5) and that the closing plug (19) abuts with a flange (21) in a sealing manner on a counter surface (22) on the mounting element (8).

12. Pipe connection arrangement (1) according to claim 10 or 11, **characterized in that** the mounting opening (9) comprises a holding flange (23) with a first surface (24) and a second surface (25), wherein the pipe connection part (2) abuts on the first surface (24) and the closing plug (19) abuts on the second surface (25), and wherein thereby the pipe connection part (2) is secured in the mounting opening (9) with respect to an axial displacement.

13. Pipe connection arrangement (1) according to any one of the preceding claims, **characterized in that**, when the pipe connection part (2) is inserted in the mounting opening (9), the pressing contour (5) lies outside of the mounting opening (9); and/or that the pressing contour (5) comprises on the exterior elevations (26) and/or grooves (27), which are formed such that a water-tight pressing connection can be provided with the first pipe.

14. Wall arrangement comprising a pipe connection arrangement (1) according to any one of the preceding claims and a wall structure (W), wherein the mounting element (8) is inserted in the wall structure (W).

15. Method of mounting a wall arrangement according to claim 14, **characterized in that** in a first step the pipe connection part (2) is connected to a first pipe via the pressing contour (5), that in a second step the pipe connection part (2) is positioned, and that in a third step, the wall structure (W) is provided.

## Revendications

1. Ensemble de raccordement de tuyau (1) pour une structure murale (W) comprenant
une pièce de raccordement de tuyau (2) avec une paroi latérale (3) qui délimite un canal de tuyau (4), un contour de pressage (5) disposé sur la paroi latérale (3), par lequel la pièce de raccordement de tuyau (2) peut être reliée à un premier tuyau, une structure filetée (6) disposée sur la paroi latérale (3) pour relier la pièce de raccordement de tuyau (2) à un deuxième tuyau, et une section de palier (7) disposée du côté extérieur sur la paroi latérale (3),
et un élément de palier (8) avec une ouverture de palier (9) s'étendant le long d'un axe central (M), qui est délimitée du côté extérieur par une paroi (10), et avec au moins un élément anti-torsion (11) s'étendant du côté extérieur de la paroi (10) en s'éloignant radialement de l'axe central (M),
la pièce de raccordement de tuyau (2) pouvant être insérée avec sa section de palier (7) dans l'ouverture de palier (9) et, à l'état inséré, étant logée de manière solidaire en rotation dans l'ouverture de palier (9) de l'élément de palier (8) et
à l'état monté, l'au moins un élément anti-torsion (11) pouvant s'étendre dans la structure murale (W) de telle sorte qu'une force agissant sur la structure filetée (6) puisse être introduite dans la structure murale (W) par l'intermédiaire de l'élément anti-torsion(11), **caractérisé**
**en ce que** l'élément anti-torsion (11) présente au moins une surface principale (14) qui se trouve dans un plan qui est incliné angulairement par rapport à l'axe central (M).

2. Ensemble de raccordement de tuyau (1) selon la revendication 1, **caractérisé en ce que** plusieurs éléments anti-torsion (11) sont disposés, les éléments anti-torsion (11) étant de préférence répartis à intervalles réguliers autour de l'axe central (M).

3. Ensemble de raccordement de tuyau (1) selon la revendication 1 ou 2, **caractérisé en ce que** l'élément anti-torsion (11) est conçu comme une section de paroi plate qui est formée sur un côté extérieur (12) de la paroi (10).

4. Ensemble de raccordement de tuyau (1) selon l'une quelconque des revendications précédentes, **caractérisé en ce que** l'élément anti-torsion (11) présente une extrémité libre en face d'un point de formage (13) sur une face extérieure (12) de la paroi (10).

5. Ensemble de raccordement de tuyau (1) selon l'une quelconque des revendications précédentes, **caractérisé en ce que** l'inclinaison angulaire de la surface principale (14) par rapport à l'axe central (M) est orientée par rapport à la structure filetée (6) de la pièce de raccordement de tuyau (2) de telle sorte que le couple généré lors d'une opération de raccordement du deuxième tuyau provoque une force sur l'élément anti-torsion (11) dans la structure murale (W) dans laquelle l'élément de palier (8) peut être monté.

6. Ensemble de raccordement de tuyau (1) selon l'une quelconque des revendications précédentes, **caractérisé en ce que** la paroi (10) de l'élément de palier (8) présente plusieurs surfaces planes (16) réparties sur la circonférence, dont les normales aux surfaces sont de préférence orientées respectivement à angle droit par rapport à l'axe central (M), et l'un desdits éléments anti-torsion (11) étant disposé respectivement sur chacune des surfaces (16) ou sur chaque deuxième surface (16).

7. Ensemble de raccordement de tuyau (1) selon l'une quelconque des revendications précédentes, **caractérisé en ce que** la section de palier (7) présente au moins une surface de palier plane (17) dont la normale à la surface est perpendiculaire à l'axe central du canal de tuyau (4), et **en ce que** l'ouverture de palier (9) présente au moins une surface de palier plane (18) dont la normale à la surface est perpendiculaire à l'axe central (M), les deux surfaces de palier (17, 18) étant en contact l'une avec l'autre lorsque la pièce de raccordement de tuyau (2) se trouve dans l'ouverture de palier (9).

8. Ensemble de raccordement de tuyau (1) selon l'une quelconque des revendications précédentes, **caractérisé en ce que** l'ouverture de palier (9) est conçue comme un polygone intérieur avec un nombre de surfaces de palier (18) correspondant au nombre d'arêtes.

9. Ensemble de raccordement de tuyau (1) selon la revendication 8, **caractérisé en ce que** les surfaces de palier (18) du polygone intérieur présentent des entailles (30) qui sont formées de telle manière
qu'une pièce de raccordement de tuyau avec une section de palier (7) conçue comme un polygone extérieur avec le même nombre d'arêtes puisse être insérée dans le polygone intérieur, et
qu'une pièce de raccordement de tuyau avec une section de palier (7) conçue comme un polygone extérieur avec un nombre d'arêtes différent du polygone intérieur puisse être insérée dans les entailles.

10. Ensemble de raccordement de tuyau (1) selon l'une quelconque des revendications précédentes, **caractérisé en ce que** l'ensemble de raccordement de tuyau comprend en outre un bouchon de fermeture (19), le bouchon de fermeture (19) comprenant une structure filetée (20) du côté du bouchon de fermeture qui peut être raccordée à la structure filetée (6) de la pièce de raccordement de tuyau (2), le bouchon de fermeture (19) bloquant l'accès au canal de tuyau (4) lorsqu'il est inséré.

11. Ensemble de raccordement de tuyau (1) selon la revendication 10, **caractérisé en ce que** le bouchon de fermeture (19) peut être vissé à partir du côté opposé au contour de compression (5) et **en ce que** le bouchon de fermeture (19) s'applique de manière étanche par une bride (21) contre une contre-surface (22) sur l'élément de palier (8).

12. Ensemble de raccordement de tuyau (1) selon la revendication 10 ou 11, **caractérisé en ce que** l'ouverture de palier (9) comprend une bride de retenue (23) avec une première surface (24) et une deuxième surface (25), le raccord de tuyau (2) étant en appui contre la première surface (24) et le bouchon de fermeture (19) étant en appui contre la deuxième surface (25), et le raccord de tuyau (2) étant ainsi bloqué dans l'ouverture de palier (9) par rapport à un déplacement axial.

13. Ensemble de raccordement de tuyau (1) selon l'une quelconque des revendications précédentes, **caractérisé en ce que**, lorsque la pièce de raccordement de tuyau (2) est insérée dans l'ouverture de palier (9), le contour de pressage (5) se trouve à l'extérieur de l'ouverture de palier (9) ; et/ou **en ce que** le contour de pressage (5) présente sur le côté extérieur des saillies (26) et/ou des rainures (27) qui sont conçues de telle sorte qu'un raccordement avec le premier tuyau par pressage étanche à l'eau puisse être mis à disposition.

14. Ensemble mural comprenant un ensemble de raccordement de tuyau (1) selon l'une quelconque des revendications précédentes et une structure murale (W), l'élément de support (8) étant encastré dans la structure murale (W).

15. Procédé de montage d'un ensemble mural selon la revendication 14, **caractérisé en ce que**, dans une première étape, la pièce de raccordement de tuyau (2) est reliée à un premier tuyau par l'intermédiaire du contour de pressage (5), **en ce que**, dans une deuxième étape, la pièce de raccordement de tuyau (2) est placée, et **en ce que**, dans une troisième étape, la structure murale (W) est mise à disposition.
